## Europäisches Patentamt
## European Patent Office
## Office européen des brevets

(19)

(11) Publication number: **0 021 734**
**B1**

(12) **EUROPEAN PATENT SPECIFICATION**

(45) Date of publication of patent specification: **11.05.83**

(21) Application number: **80301979.3**

(22) Date of filing: **12.06.80**

(51) Int. Cl.³: **F 16 C 33/80,**
**F 16 J 15/44, B 62 M 9/10,**
**B 60 B 27/02**

(54) **Bearing sealing assembly.**

(30) Priority: **20.06.79 JP 85324/79 U**

(43) Date of publication of application:
**07.01.81 Bulletin 81/1**

(45) Publication of the grant of the patent:
**11.05.83 Bulletin 83/19**

(84) Designated Contracting States:
**DE FR GB IT NL**

(56) References cited:
**DE - C - 491 159**
**FR - A - 439 411**
**FR - A - 1 168 825**
**FR - A - 1 315 391**
**US - A - 2 159 766**
**US - A - 2 279 814**
**US - A - 2 850 311**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Minamimachi**
**Midorigaoka Sakai-shi, Osaka (JP)**

(74) Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England.

Bearing sealing assembly

This invention relates to a sealing assembly for a bearing means between a rotary member rotatably supported on a stationary member and said stationary member, which assembly comprises a ring-shaped sealing member mounted on one of said rotary and stationary members.

Generally, such bearing means are sealed with the aid of a ring-shaped sealing member formed of a flexible material and mounted on the stationary or rotary member, so that the sealing member closes a gap between the stationary member and the rotary member, thereby preventing dust or rain water from entering the bearings.

Sealing members of this type of construction are, however, more or less in contact, at their inner or outer periphery, with the rotary member or stationary member thereby resulting in incomplete sealing and/or increased frictional resistance. As a result, not only is smooth and light rotation of the rotating member hindered but also wear of the sealing member results in the need for replacement of the sealing member after a relatively short time and incomplete sealing.

There is known from FR—A—1315391 a sealing assembly for a bearing means between a rotary member rotatably supported on a stationary member and said stationary member which assembly comprises a first annular sealing means component in the form of a ring-shaped sealing member made up of two part-circular sealing member portions and having on its inner peripheral surface a plurality of grooves and/or ridges and mounted on one of said stationary and rotary members radially outwardly of a second, annular, sealing means component, mounted on the other of said stationary and rotary members axially outwards of a ball race of a bearing means and having formed on its outer peripheral surface grooves and/or ridges, dimensioned and arranged for inter-engagement with said grooves and/or ridges of said ring-shaped sealing member with a narrow clearance therebetween so as to define a narrow annular zigzag passage between said first and second sealing means components and each said sealing member portion having an end face for contacting another, opposed, end face of a said sealing member portion when said sealing member portions are mounted on said one of said stationary and rotary members to form said ring-shaped sealing member. In this form of known construction the radially inner sealing means component is formed separately from the axially inwardly located bearing means so that if the position of said bearing means is, for any reason, changed on the inner member there is a significant risk of the position of said inner sealing means component not being correspondingly adjusted whereby the spacing between the inner and outer sealing means components will be changed resulting in either imperfect sealing or frictional resistance therebetween.

It is an object of the present invention to minimise one or more of the above-mentioned disadvantages.

The present invention provides a sealing assembly for a bearing means between a rotary member rotatably supported on a stationary member and said stationary member which assembly comprises a first annular sealing means component in the form of a ring-shaped sealing member made up of at least two part-circular sealing member portions and having on its inner peripheral surface a plurality of grooves and/or ridges and mounted on one of said stationary and rotary members radially outwardly of a second, annular, sealing means component, mounted on the other of said stationary and rotary members axially outwards of a ball race of a bearing means and having formed on its outer peripheral surface grooves and/or ridges, dimensioned and arranged for inter-engagement with said grooves and/or ridges of said ring-shaped sealing member with a narrow clearance therebetween so as to define a narrow annular zigzag passage between said first and second sealing means components, and each said sealing member portion having an end face for contacting another, opposed, end face of a said sealing member portion when said sealing member portions are mounted on said one of said stationary and rotary members to form said ring-shaped sealing member, characterized in that said second, annular, sealing means component is integrally formed with a said bearing means which is in the form of a bearing cone on an axially outward extension of said bearing cone.

By having at least two part-circular sealing member portions arranged to fit around the outer periphery of the bearing cone to form a generally ring-shaped sealing member with inter-engaging grooves and ridges of the bearing cone and the sealing member portions cooperating together so as to define a narrow zig-zag annular passage, rainwater and dust can be substantially excluded from a bearing without increasing frictional resistance between the relatively rotating parts.

Further preferred features of the present invention will appear from the following description given by way of example of a preferred embodiment illustrated with reference to the accompanying drawings, in which:

Fig. 1 is a partially sectioned front elevation of bearing sealing assembly of the invention in use with a cycle hub;

Fig. 2 is a sectional view taken on the line II—II in Fig. 1;

Fig. 3 is a detail sectional view corresponding to Fig. 1 on an enlarged scale; and

Figs. 4 to 9 are view corresponding to Fig. 3 of alternative embodiments.

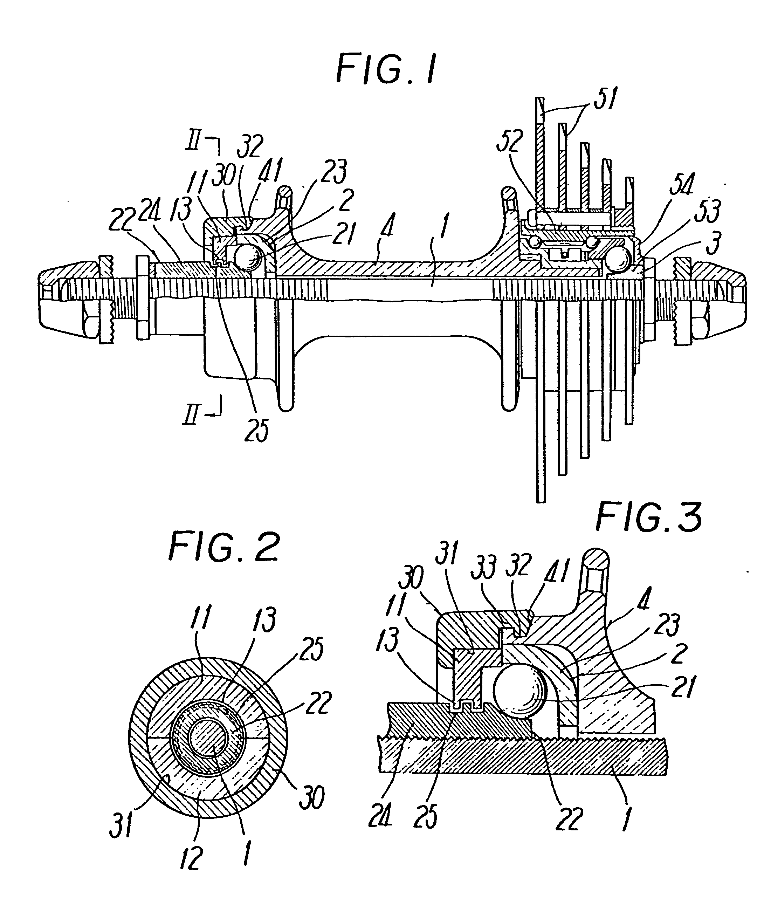

A first embodiment of a sealing assembly of the invention is shown in Figs. 1 to 3 of the drawings in use with a cycle hub. Fig. 1 shows a cycle hub comprising a hub shell 4 rotatably supported on a hub shaft 1 by first and second bearings 2 and 3.

In detail, the sealing assembly is used for sealing an annular gap between the hub shell 4 and the hub shaft 1 at a point axially outwards of the bearing 2 on the left side of the hub shell 4 (as viewed in Fig. 1), the bearing 2 comprising balls 21, an inner bearing cone 22, having a ball race, and an outer bearing cone 23 which is a press-fit into the hub shell 4.

The sealing assembly of the invention comprises in combination two halves 11, 12 of a diametrically split ring-shaped sealing member which cooperate with the inner bearing cone 22. The bearing cone 22 extends axially outwardly from the ball race to form an annular extension 24 thereof. The extension 24 is provided at its outer peripheral surface with two or more circumferentially extending grooves 25, and the sealing member halves 11 and 12 have at their inner surfaces opposite the outer peripheral surface of the extension 24, axially spaced annular circumferentially extending ridge means 13 which locate in said grooves 25 with a narrow clearance therebetween. At both circumferential ends of each of the sealing member halves 11, 12 are provided radially extending end faces which come into close contact with each other to form together a ring-shaped sealing member. The sealing member halves 11, 12 are secured in position around hub shaft 1 by fixing means to be described hereinbelow.

As a further alternative the inner bearing cone 22 could have the ridges 13 and the sealing member halves 11, 12, the grooves 25 respectively, or each of the bearing cone 22 and sealing members 11 and 12 may have both ridges and grooves.

It will also be appreciated that the sealing member instead of being split into two halves i.e. semi-circular portions, could be circumferentially interrupted into more than two part-circular sealing member portions.

In general the sealing member portions 11, 12 are formed mainly of metal or hard synthetic resin, but could alternatively be formed of a resiliently deformable polymeric material such as elastic rubber or soft synthetic resin.

Fixing means for securing sealing member portions 11, 12 in position to form the ring-shaped sealing member will now be described.

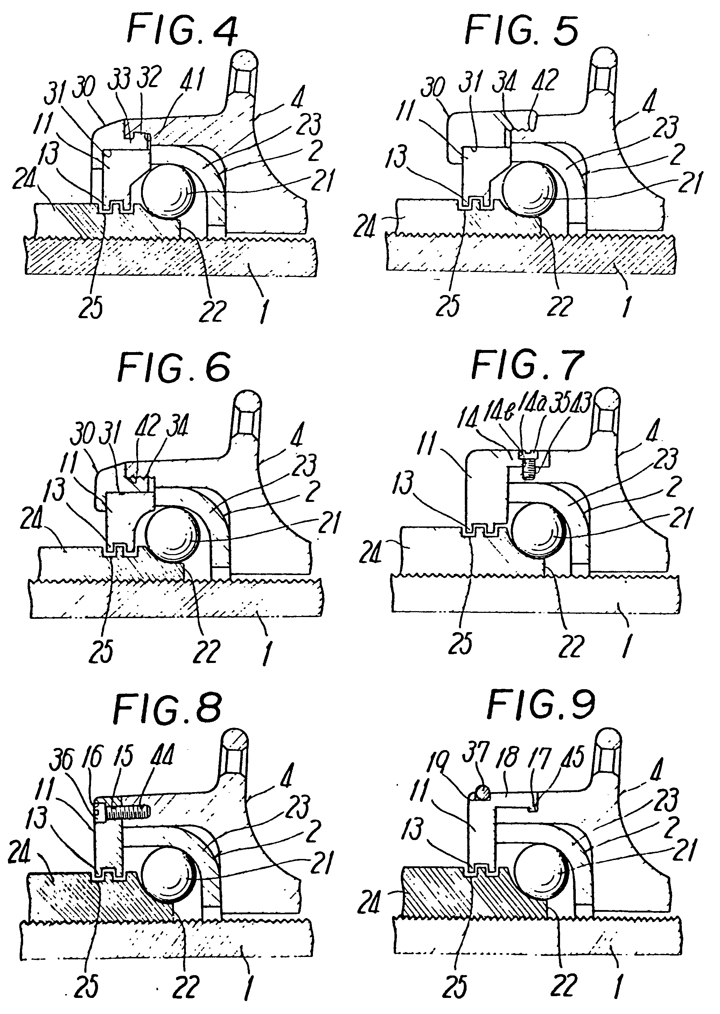

Five different fixing means are shown in Figs. 3 to 9. A first type of fixing means, as shown in Figs. 1, 3 and 4, uses a ring-shaped mounting member 30 which has an inner face holding portion 31 for holding the outer periphery of the respective sealing member portions 11, 12. The mounting member 30 is provided with a radially inwardly (Fig. 3) or outwardly (Fig. 4) extending rim 32 which is connected axially leftwardly (as viewed in Fig. 1) to the rest of the mounting member 30 by a connecting portion 33. At the outer (Fig. 3) or inner (Fig. 4) periphery of one axial end of the hub shell 4 is provided a circumferentially extending groove 41 engageable with the projection 32, so that the sealing member portions 11, 12 are held in by the holding portion 31, so as to closely contact each other at their opposed end faces, and the mounting member projection 32 engages in the groove 41, thereby securing the mounting member 30 on the hub shell 4.

The projection 32 is elastically deformed with bending at the connecting portion 33 to enable the projection 32 to expand radially before it engages as a snap-fit in the hub shell groove 41. Alternatively, the projection 32 could be circumferentially interrupted at regular intervals to facilitate a snap-fit mounting of the mounting member 30 on the hub shell.

A second type of fixing means, as shown in Figs. 5 and 6, uses a mounting member 30 provided at its inner (Fig. 5) or outer (Fig. 6) periphery of one axial end with a screw thread 34. The hub shell 4 is provided at its outer (Fig. 5) or inner (Fig. 6) periphery with a screw thread 42 screwable with the screw thread 34 so that the screw threads 34 and 42 are screwably engaged thereby to secure the mounting member 30 on the hub shell the sealing member portions 11, 12 which are held on the holding portion 31.

A third fixing means is shown in Fig. 7, in which the respective sealing member portions 11, 12 are each provided with a radially outwardly disposed mounting portion 14 which extends circumferentially and, projects axially rightwards (as viewed in Fig. 7) of the sealing member, the mounting portion 14 having a through bore 14a through which a mounting bolt 35 may be disposed, a countersunk recess 14b also being provided for receiving the head of the bolt 35. The hub shell 4 is provided at one axial end with a threaded bore 43 disposable in alignment with said bore 14a, for receiving the forward end of the bolt 35 in screw threaded engagement therewith, for securing said mounting portion 14 to the hub shell 4 and thereby the sealing member portions 11, 12 with their opposed end faces in close contact with each other.

A fourth fixing means is shown in Fig. 8, in which the respective sealing member portions 11, 12 are provided near their outer periphery with a through bore 15 which extends axially of the sealing member and through which a mounting bolt 36 may be disposed with its head locating in a countersunk recess 16. The hub shell 4 is provided in its corresponding end face with a blind threaded bore 44 disposable in alignment with the through bore 15, so that the mounting bolt 36 can be inserted to extend through the bore 15 for screw threaded engagement in the bore 44 thereby to fix mounting portion 14 to the hub shell 4 and thereby the sealing member portions 11, 12 with their opposed end faces in close contact with each other.

A fifth means is shown in Fig. 9, in which the respective sealing member portions 11, 12 each have at one axial end a circumferentially extending radially inwardly projecting projection 17 which is connected through a connecting portion 18 to the rest of the sealing member portion 11, 12 and are each provided at the outer periphery with a circumferentially extending groove 19. The hub shell 4 is provided at the outer periphery of one axial end with a circumferentially extending groove 45 engageable with the projection 17, so that the projection 17 insertably engages with the groove 45 and a C-shaped snap ring 37 locates in the groove 19, thereby fixing to the hub shell 4 the sealing member portions 11, 12 with their opposed end faces in close contact with each other.

The above described fixing means secures the sealing member portions 11, 12 to for example, the hub shell 4, in such a manner that the sealing member portions 11, 12 are separately fitted onto the outer periphery of the bearing cone 22 so as to allow the ridges 13 to interengage with the grooves 25 with a narrow clearance therebetween thereby forming a narrow annular zig-zag passage between the sealing member portions 11, 12, and the inner bearing cone 22.

The labyrinth-like form of the zig-zag passage enables a gap extending between the hub shell 4 and the inner bearing cone 22 to be substantially closed against the ingress of dust or rain water to the bearing 2.

Any dust or rain water attempting to enter the bearing 2, has at first to pass through an outermost narrow portion of the passage formed between the side walls of the first i.e. axially outer groove 25 on the bearing cone 22 and the first i.e. axially outer ridge 13 of the sealing member portions 11, 12 and is substantially stopped at this stage. Any dust or rain water which has penetrated this far then has to pass through the next portion of the passage between the bottom face of said first groove 25 and the top of the first ridge 13 and thereafter through the succeeding portion of the passage between the side walls of the groove 25 and ridge 13.

The sealing assembly of the invention, which is shown in use with the axially leftward side (as shown in the drawings) of the hub shell 4 in the above described embodiments, is equally applicable to the axially rightward side of the hub shell 4.

The hub shown in Fig. 1 has at its rightward side a drive member 52 provided with sprockets 51. A further set of sealing member portions 11, 12 could be fixed onto the inner periphery of the drive member 52, and the adjacent bearing cone 53 of the bearing 3 which cone 53 is mounted on the hub shaft 1 in screw threaded engagement therewith, is provided with complementary portions for inter engagement with the sealing member portions 11, 12 in similar manner to that engagement described for the leftward side sealing assembly. Actually, on the rightward side there is shown a conventional sealing member 54 of flexible material mounted on said bearing cone 53.

Thus whilst the sealing assembly of the invention provides a high degree of resistance to ingress of water and dust to the bearing, it does so without increasing frictional resistance between the relatively rotating parts.

The sealing assembly of the invention is applicable not only to hub bearings as shown in the drawings, but also to other bearings comprising any two relatively rotating parts as, for example, between a cycle frame head tube and a front fork rotatably supported in the head tube; a bottom bracket and a crank shaft rotatably supported in the bottom bracket; or a pedal shaft and a pedal rotatably supported thereon.

The sealing assembly of the invention is particularly applicable to relatively rotating parts comprising stationary and rotary members rotatably supported thereon via bearing means as will be easily understandable by those skilled in the art. With reference to the above, stationary members include items such as a hub shaft, head tube, bottom bracket, and pedal shaft and rotary members include a hub shell, front fork, crank shaft and pedal body, respectively.

## Claims

1. A sealing assembly for a bearing means (2, 3) between a rotary member (4) rotatably supported on a stationary member (1) and said stationary member (1) which assembly comprises a first annular sealing means component in the form of a ring-shaped sealing member made up of at least two part-circular sealing member portions (11, 12) and having on its inner peripheral surface a plurality of grooves and/or ridges (13) and mounted on one (4) of said stationary and rotary members (1, 4) radially outwardly of a second, annular, sealing means component (24), mounted on the other (1) of said stationary and rotary members (1, 4) axially outwards of a ball race of a bearing means (22) and having formed on its outer peripheral surface grooves and/or ridges (25), dimensioned and arranged for inter-engagement with said grooves and/or ridges (13) of said ring-shaped sealing member (11, 12) with a narrow clearance therebetween so as to define a narrow annular zig-zag passage between said first and second sealing means components (11, 12, 24), and each said sealing member portion (11, 12) having an end face for contacting another, opposed, end face of a said sealing member portion (12, 11) when said sealing member portions (11, 12) are mounted on said one (4) of said stationary and rotary members (1, 4) to form said ring-shaped sealing member, characterized in that said second, annular, sealing means component is integrally formed with a said bearing means which is in the form of a bearing cone (22) on an axially outward extension (24) of said bearing cone (22).

2. A sealing assembly according to Claim 1, wherein the outer peripheral surface of said bearing cone extension (24) has formed thereon grooves (25) and the inner peripheral surface of each of said sealing member portions (11, 12) opposite thereto has formed thereon ridges (13).

3. A sealing assembly according to Claim 1 or Claim 2 wherein the sealing member portions (11, 12) are held together in the form of said ring-shaped sealing member by a fixing means comprising a ring-shaped mounting member (30) having an annular holding portion (31) for receiving therein said sealing member portions (11, 12) and including engaging means (32) engageable with said one of said stationary and rotary members (1, 4), on which said sealing member portions (11, 12) are mounted.

4. A sealing assembly according to Claim 1 or Claim 2, wherein the sealing member portions (11, 12) are held together in the form of said ring shaped sealing member by a fixing means comprising a mounting portion (14, 18) extending axially of each of said sealing member portions (11, 12) and a securing means (35, 37, 45) for securing said mounting portion to said one of said stationary and rotary members (1, 4) on which said sealing member portions (11, 12) are mounted.

5. A sealing assembly according to Claim 4, wherein the outer peripheral surface of each of said sealing member portions (11, 12) is provided with a circumferentially extending engagement groove (19) for receiving a snap ring (37) for securely retaining said sealing member portions to said one of said stationary and rotary members (1, 4).

6. A sealing assembly according to any one of Claims 1, 2 and 4 wherein the sealing member portions (11, 12) are held together in the form of said ring-shaped sealing member by a fixing means comprising mounting screws (35, 36), each said sealing member portion (11, 12) having a through bore through which a respective said mounting screw (35, 36) is disposable for screw threaded engagement in a threaded bore (44, 45) in said one of said stationary and rotary members (1, 4) on which said sealing member portion (11, 12) is mounted.

7. A sealing assembly according to any one of Claims 1 to 6 wherein the sealing member is constituted by two semi-circular sealing member portions (11, 12).

8. A sealing assembly as claimed in any one of Claims 1 to 7 wherein each said sealing member portion (11, 12) has on its inner peripheral surface two said ridges (13) and said bearing cone extension (24) has on its outer peripheral surface two grooves (25) which interdigitate with said ridges (13) in closely spaced relation thereto.

**Patentansprüche**

1. Abdichtungseinheit für ein Lagermittel (2, 3) zwischen einem drehbar auf einem feststehenden Glied (1) gelagerten Drehglied (4) und dem besagten feststehenden Glied (1), die einen ersten ringförmigen Abdichtungsmittelteil in der Form eines ringförmigen Abdichtungsglieds umfasst, das aus mindestens zwei teil-kreisförmigen Dichtungsgliedteilstücken (11, 12) besteht und an seiner inneren Umfangsfläche eine Mehrzahl Nuten und/oder Rippen (13) besitzt und auf einem (4) der besagten feststehenden und drehbaren Glieder (1, 4) radial ausserhalb eines zweiten, ringförmigen Abdichtungsmittelteils (24) aufmontiert ist, der auf dem anderen (1) der besagten feststehenden und drehbaren Glieder (1, 4) axial ausserhalb eines Kugelrings eines Lagermittels (22) aufmontiert ist und auf dessen äusserer Umfangsfläche Nuten und/oder Rippen (25) ausgebildet sind, die für einen Zwischeneingriff in die besagten Nuten und/oder Rippen (13) des besagten ringförmigen Abdichtungsglieds (11, 12) mit einem dazwischenliegenden engen Spielraum so dimensioniert und angeordnet sind, dass dadurch ein enger ringförmiger Zickzackdurchgang zwischen den besagten ersten und zweiten Abdichtungsmittelteilen (11, 12, 24) abgegrenzt wird, und wobei jedes besagte Abdichtungsteilstück (11, 12) mit einer Endfläche versehen ist, womit es gegen eine andere gegenüberliegende Endfläche eines besagten Abdichtungsgliedteilstücks (12, 11) anliegt, wenn die besagten Abdichtungsgliedteilstücke (11, 12) auf dem besagten einen (4) der besagten feststehenden und drehbaren Glieder (1, 4) aufmontiert sind, um das besagte ringförmige Abdichtungsglied zu bilden, dadurch gekennzeichnet, dass der besagte zweite, ringförmige Abdichtungsmittelteil aus einem Stück mit einem besagten Lagermittel in der Form eines Lagerkegels (22) auf einer axial äusseren Verlängerung (24) des besagten Lagerkegels (22) geformt ist.

2. Abdichtungseinheit nach Anspruch 1, dadurch gekennzeichnet, dass auf der äusseren Umfangsfläche der besagten Lagerkegelverlängerung (24) Nuten (25) ausgebildet sind, und dass auf der inneren Umfangsfläche der besagten gegenüberliegenden Abdichtungsgliedteilstücke (11, 12) jeweils Rippen (13) ausgebildet sind.

3. Abdichtungseinheit nach Anspruch 1 oder 2, dadurch gekennzeichnet, dass die Abdichtungsgliedteilstücke (11, 12) in der Form des besagten ringförmigen Abdichtungsglieds durch ein Befestigungsmittel zusammengehalten werden, das ein ringförmiges Montageglied (30) mit einem ringförmigen Halteteilstück (31) zur Aufnahme der besagten Abdichtungsgliedteilstücke (11, 12) umfasst und Eingriffmittel (32) enthält, die in besagtes eines der besagten feststehenden und drehbaren Glieder (1, 4) eingreifen können, auf dem die besagten Abdichtungsgliedteilstücke (11, 12) aufmontiert sind.

4. Abdichtungseinheit nach Anspruch 1 oder 2, dadurch gekennzeichnet, dass die Abdichtungsgliedteilstücke (11, 12) in der Form des besagten ringförmigen Abdichtungsglieds durch ein Befestigungsmittel zusammengehalten werden, das ein sich axial von jedem der besagten Abdichtungsgliedteilstücke (11, 12) erstreckendes Montageteilstück (14, 18) und ein Festhaltemittel (35, 37, 45) zum Festhalten des besagten Montageteilstücks an dem besagten einen der besagten feststehenden und drehbaren Glieder (1, 4), auf dem die besagten Abdichtungsteilstücke (11, 12) aufmontiert sind, umfasst.

5. Abdichtungseinheit nach Anspruch 4, dadurch gekennzeichnet, dass die äussere Umfangsfläche der besagten Dichtungsgliedteilstücke (11, 12) jeweils mit einer sich über den Umfang erstreckenden Eingriffsnute (19) versehen ist zur Aufnahme eines Sicherungsrings (37) für das sichere Festhalten der besagten Abdichtungsgliedteilstücke an einem der besagten feststehenden und drehbaren Glieder (1, 4).

6. Abdichtungseinheit nach einem der Ansprüche 1, 2 und 4, dadurch gekennzeichnet, dass die Abdichtungsgliedteilstücke (11, 12) in der Form des besagten ringförmigen Abdichtungsglieds durch ein Montageschrauben (35, 36) umfassendes Befestigungsmittel zusammengehalten werden, wobei das besagte Abdichtungsgliedteilstück (11, 12) jeweils mit einer Durchbohrung versehen ist, durch die eine entsprechende besagte Montageschraube (35, 36) zum Schraubengewindeeingriff in eine Gewindebohrung (44) in dem besagten einen der besagten feststehenden und drehbaren Glieder (1, 4) angeordnet werden kann, auf dem das besagte Abdichtungsgliedteilstück (11, 12) angeordnet ist.

7. Abdichtungseinheit nach einem der Ansprüche 1 bis 6, dadurch gekennzeichnet, dass das Abdichtungsglied aus zwei halbkreisförmigen Abdichtungsgliedteilstücken (11, 12) besteht.

8. Abdichtungseinheit nach einem der Ansprüche 1 bis 7, dadurch gekennzeichnet, dass das besagte Abdichtungsgliedteilstück (11, 12) jewells auf seiner inneren Umfangsfläche mit zwei besagten Rippen (13) versehen ist und die besagte Lagerkegelverlängerung (24) auf ihrer äusseren Umfangsfläche mit zwei Nuten (25) versehen ist, die zwischen den besagten Rippen (13) in engräumigem Verhältnis zu diesen eingreifen.

## Revendications

1. Assemblage d'étanchéité pour un palier (2, 3) placé entre une pièce tournante (4) supportée en rotation sur une pièce fixe (1) et ladite pièce fixe (1), cet assemblage comprenant un premier composant annulaire de moyens d'étanchéité sous la forme d'une pièce annulaire d'étanchéité constituée d'au moins deux parties en segment de cercle (11, 12) de pièce d'étanchéité, qui comporte sur sa surface périphérique intérieure une pluralité de gorges et/ou de nervures (13) et qui est monté sur l'une (4) des pièces, fixe ou tournante (1, 4), radialement vers l'extérieur d'un deuxième composant annulaire (24) des moyens d'étanchéité qui est monté sur l'autre (1) des pièces, fixe ou tournante (1, 4), axialement vers l'extérieur d'un chemin de roulement à billes d'un palier (22), et qui comporte sur sa surface périphérique extérieure des gorges et/ou des nervures (25) dimensionnées et agencées pour s'imbriquer avec les gorges et/ou les nervures (13) de la pièce annulaire d'étanchéité (11, 12) avec un faible jeu entre elles, de façon à définir un étroit passage annulaire en zigzag entre les premier et deuxième composants (11, 12, 24) des moyens d'étanchéité, chaque partie (11, 12) de la pièce d'étanchéité présentant une face d'extrêmité qui vient en contact avec une autre face opposée d'extrêmité d'une dite partie (12, 11) de la pièce d'étanchéité lorsque les parties (11, 12) de la pièce d'étanchéité sont montées sur la première (4) des pièces fixe ou tournante (1, 4) pour former la pièce annulaire d'étanchéité, caractérisé en ce que le deuxième composant annulaire des moyens d'étanchéité soit partie intégrante d'un élément du palier, qui est en forme de cône de palier (22) sur un prolongement (24) dirigé axialement vers l'extérieur du cône de palier (22).

2. Assemblage d'étanchéité suivant la revendication 1, caractérisé en ce que la surface périphérique extérieure du prolongement (24) du cône de palier comporte des gorges (25) et en ce que la surface périphérique intérieure de chacune des parties (11, 12) de la pièce d'étanchéité, en face de ces gorges, comporte des nervures (13).

3. Assemblage d'étanchéité suivant la revendication 1 ou la revendication 2, caractérisé en ce que les parties (11, 12) de la pièce d'étanchéité sont maintenues ensemble, sous la forme de ladite pièce annulaire d'étanchéité, par des moyens de fixation comprenant une pièce annulaire de fixation (30) qui comporte une partie annulaire de retenue (31), dans laquelle peuvent se loger les parties (11, 12) de la pièce d'étanchéité, et des moyens d'engagement (32) qui peuvent venir en contact avec celle des pièces fixe ou tournante (1, 4) sur laquelle les parties (11, 12) de la pièce d'étanchéité sont montées.

4. Assemblage d'étanchéité suivant la revendication 1 ou la revendication 2, caractérisé en ce que les parties (11, 12) de la pièce d'étanchéité sont maintenues ensemble, sous la forme de ladite pièce annulaire d'étanchéité, par des moyens de fixation comprenant une partie de fixation (14, 18), dirigée axialement par rapport à chacune des parties (11, 12) de la pièce d'étanchéité, et des moyens de blocage (35, 37, 45) pour maintenir cette partie de fixation sur celle des pièces fixe ou tournante (1, 4) sur laquelle les parties (11, 12) de la pièce d'étanchéité sont montées.

5. Assemblage d'étanchéité suivant la revendication 4, caractérisé en ce que la surface périphérique extérieure de chacune desdites parties (11, 12) de la pièce d'étanchéité comporte une gorge circonférentielle d'engagement (19) pour recevoir un anneau élastique (37), afin de retenir solidement ces parties de la pièce d'étanchéité sur la première des pièces fixe ou tournanate (1, 4).

6. Assemblage d'étanchéité suivant l'une quelconque des revendications 1, 2 et 4, caractérisé en ce que les parties (11, 12) de la pièce d'étanchéité sont maintenues ensemble, sous la forme de ladite pièce annulaire d'étanchéité, par des moyens de fixation comprenant des vis de montage (35, 36), chaque partie (11, 12) de la pièce d'étanchéité comportant un trou traversant dans lequel une vis de montage respective (35, 36) peut être placée pour se visser dans un trou taraudé (44, 45) prévu dans celle des pièces fixe ou tournante (1, 4) sur laquelle les parties (11, 12) de la pièce d'étanchéité sont montées.

7. Assemblage d'étanchéité suivant l'une quelconque des revendications 1 à 6, caractérisé en ce que la pièce d'étanchéité est constituée de deux parties semi-circulaires (11, 12) de pièce d'étanchéité.

8. Assemblage d'étanchéité suivant l'une quelconque des revendications 1 à 7, caractérisé en ce que chaque partie (11, 12) de la pièce d'étanchéité comporte dans sa surface périphérique intérieure deux nervures (13) et en ce que le prolongement (24) du cône de palier comporte dans sa surface périphérique extérieure deux gorges (25) qui s'imbriquent avec les nervures (13), avec un faible espacement relatif.

# FIG. 1

# FIG. 2

# FIG. 3

# FIG. 4

# FIG. 5

# FIG. 6

# FIG. 7

# FIG. 8

# FIG. 9